# EUROPÄISCHE PATENTSCHRIFT

(11) **EP 1 720 712 B1**
(45) Veröffentlichungstag und Bekanntmachung des Hinweises auf die Patenterteilung: **03.09.2008**
(21) Anmeldenummer: 05707500.4
(22) Anmeldetag: 18.02.2005
(51) Int. Cl.: B41M 5/26, C08K 3/22, C08K 9/02

(54) **HOCHTRANSPARENTE LASERMARKIERBARE UND LASERSCHWEISSBARE KUNSTSTOFFMATERIALIEN**
HIGHLY TRANSPARENT LASER-MARKABLE AND LASER-WELDABLE PLASTIC MATERIALS
MATIERES PLASTIQUES HAUTEMENT TRANSPARENTES QUI PEUVENT ETRE MARQUEES ET SOUDEES AU LASER

(30) Priorität: 04.03.2004 DE 102004010504
(43) Veröffentlichungstag der Anmeldung: 15.11.2006
(73) Patentinhaber: Evonik Degussa GmbH, 45128 Essen (DE)
(72) Erfinder: HÄGER, Harald, 63579 Freigericht (DE); HASSKERL, Thomas, 61476 Kronberg (DE); WURSCHE, Roland, 48249 Dülmen (DE); ITTMANN, Günther, 64823 Gross-Umstadt (DE); LOHKÄMPER, Hans-Günther, 45721 Haltern (DE); SCHÜBEL, Klaus-Dieter, 45657 Recklinghausen (DE)
(86) Internationale Anmeldenummer: PCT/EP2005/001689
(87) Internationale Veröffentlichungsnummer: WO 2005/084956

(56) Entgegenhaltungen:
- EP-A- 0 659 844
- WO-A-02/060988
- WO-A-02/079328
- DE-A1- 4 415 802
- DE-A1- 4 435 376
- US-A- 5 350 448
- US-A- 5 504 133
- US-A- 5 654 090
- US-A- 5 716 553
- US-A1- 2002 077 380
- US-A1- 2003 165 680
- US-B1- 6 221 144

## Beschreibung

Die vorliegende Erfindung betrifft die Verwendung hochtransparenter Kunststoffmaterialien, die durch einen Gehalt an nanoskaligen lasersensitiven Metalloxiden lasermarkierbar und/oder laserschweißbar sind, ein Verfahren zur Verschweißung bzw. Lasermarkierung von Kunststoffartikeln sowie die so erhaltenen verschweißten bzw. markierten Artikel.

Die Kennzeichnung von Kunststoffen durch Lasermarkierung wie auch das Schweißen von Kunststoffteilen mittels Laserenergie ist an sich bekannt. Beides wird durch Absorption der Laserenergie im Kunststoffmaterial entweder direkt durch Wechselwirkung mit dem Polymer oder indirekt mit einem dem Kunststoffmaterial zugesetzten lasersensitiven Mittel bewirkt. Das lasersensitive Mittel kann ein organischer Farbstoff oder ein Pigment sein, welches durch Absorption der Laserenergie eine lokale sichtbare Verfärbung des Kunststoffes bewirkt. Es kann auch eine Verbindung sein, die bei Bestrahlung mit Laserlicht von einer unsichtbaren, farblosen in eine sichtbare Form umgewandelt wird. Beim Laserschweißen wird das Kunststoffmaterial durch Absorption der Laserenergie im Fügebereich so stark erwärmt, dass das Material aufschmilzt und beide Teile miteinander verschweißen.

Die Kennzeichnung von Produktionsgütern wird in nahezu allen Industriezweigen zunehmend wichtiger. So müssen etwa Produktionsdaten, Chargennummern, Verfallsdaten, Produktkennungen, Barcodes, Firmenlogos etc. aufgebracht werden. Gegenüber konventionellen Kennzeichnungstechniken wie Drucken, Prägen, Stempeln, Etikettieren ist die Lasermarkierung deutlich schneller, da berührungslos arbeitend, präziser und ohne weiteres auch auf nicht planen Oberflächen aufzubringen. Da die Lasermarkierungen unter der Oberfläche im Material erzeugt werden, sind diese dauerhaft, haltbar und wesentlich sicherer gegenüber Entfernung, Veränderung oder gar Fälschung. Kontakt mit anderen Medien, etwa bei Flüssigkeitsbehältern und Verschlüssen, ist aus diesem Grund - unter der selbstverständlichen Voraussetzung, daß die Kunststoffmatrix beständig ist - ebenfalls unkritisch. Sicherheit und Dauerhaftigkeit von Produktionskennungen sowie Kontaminationsfreiheit sind äußerst wichtig etwa bei Verpackungen von Pharmazeutika, Lebensmitteln und Getränken.

Das Prinzip der Verbundbildung zwischen Fügepartnern beim Laserschweißen beruht darauf, daß ein der Laserquelle zugewandter Fügepartner eine für das Licht der Laserquelle, das eine spezifische Wellenlänge aufweist, ausreichende Transparenz besitzt, so daß die Strahlung den darunterliegenden Fügepartner erreicht, wo sie absorbiert wird. Infolge dieser Absorption wird Wärme freigesetzt, so daß im Kontaktbereich der Fügepartner nicht nur das absorbierende, sondern auch das transparente Material lokal aufschmelzen und sich partiell vermischen, wodurch nach Abkühlen ein Verbund erzeugt wird. Beide Teile werden im Ergebnis auf diese Weise miteinander verschweißt.

Die Lasermarkierbarkeit bzw. Laserschweißbarkeit ist abhängig von der Natur der Kunststoffmaterialien bzw. der diesen zugrunde liegenden Polymere, von Natur und Gehalt an etwaigen lasersensitiven Zusätzen sowie von Wellenlänge und Strahlungsleistung des eingesetzten Lasers. Neben CO₂- und Excimer-Lasern kommen in dieser Technik vermehrt Nd:YAG-Laser (Neodym-dotierte Yttrium-Aluminium-Garnet-Laser) mit den charakteristischen Wellenlängen 1064 nm und 532 nm zum Einsatz. Bei der Lasermarkierung wird eine gute Erkennbarkeit - möglichst dunkel vor hellem Hintergrund - und ein hoher Kontrast gewünscht.

Lasermarkierbare bzw. laserschweißbare Kunststoffmaterialien, die lasersensitive Zusätze in Form von Farbstoffen und/oder Pigmenten enthalten, weisen generell eine mehr oder weniger ausgeprägte Färbung und/oder Intransparenz auf. Im Falle des Laserschweißens erfolgt die Ausrüstung der als laserabsorbierend einzustellenden Formmasse am häufigsten durch das Einbringen von Ruß.

In EP O 797 511 B1 werden beispielsweise lasermarkierbare Kunststoffmaterialien beschrieben, die Pigmente mit einer leitfähigen Schicht aus dotiertem Zinndioxid enthalten. Diese Pigmente, enthalten in dem Material in Konzentrationen von 0,1 bis 4 Gew.-%, basieren auf plättchenförmigen transparenten oder semitransparenten Substraten, insbesondere Schichtsilikaten wie etwa Glimmer. Transparente Thermoplaste mit derartigen Pigmenten zeigen allerdings ein metallisches Schimmern, das durch Zusatz deckender Pigmente völlig überdeckt werden kann. Mit derartigen Pigmenten können somit keine hochtransparenten lasermarkierbaren Kunststoffmaterialien hergestellt werden.

In WO 01/00719 werden lasermarkierbare Artikel beschrieben, die Antimontrioxid mit Partikelgrößen über 0,5 µm als Lasermarkierungspigment enthalten. Man erhält dunkle Markierungen auf hellem Grund und guten Kontrast. Jedoch sind die Artikel aufgrund der Teilchengröße des Pigments nicht mehr transparent.

Nur wenige Polymersysteme sind an sich und ohne weitere lasersensitive Zusätze lasermarkierbar bzw. laserschweißbar. Hierzu werden vornehmlich Polymere mit ringförmigen oder aromatischen Strukturen eingesetzt, die leicht zur Verkohlung unter Einwirkung von Laserstrahlung neigen. Derartige Polymermaterialien sind jedoch aufgrund ihrer Zusammensetzung nicht witterungsstabil. Der Kontrast der Beschriftungen ist schlecht und wird nur durch Zusatz von lasersensitiven Partikeln oder Farbstoffen verbessert. Diese Polymermaterialien sind aufgrund fehlender Lasertransparenz auch nicht schweißbar.

In WO 98/28365 werden lasermarkierbare Polymerzusammensetzungen aus einem Polymethacrylat mit einem Acrylatcomonomeren und einem zweiten Polymer aus Styrol und Maleinsäureanhydrid, die ggf. noch weitere Additive enthalten können, beschrieben. Aufgrund des Gehaltes an Styrol und Maleinsäureanhydrid werden keine zusätzlichen lasersensitiven Pigmente benötigt. Die Formteile haben einen Haze von etwa 5 - 10 %. Kunststoffformkörper mit einem Haze von etwa 5 - 10 % genügen jedoch nicht den heutigen Anforderungen. Für hochtransparente Anforderungen wird ein Haze unter 1 % , mindestens jedoch unter 2 % benötigt.

In DE 10054859 A1 wird ein Verfahren zum Laserschweißen von Kunststoffformteilen beschrieben, wobei der Laserstrahl durch ein lasertransparentes Formteil I geleitet wird und in einem laserabsorbierenden Formteil II eine Erwärmung hervorruft, wodurch die Schweißung erfolgt. Die Formteile enthalten so aufeinander abgestimmte lasertransparente und laserabsorbierende Farbstoffe und Pigmente wie insbesondere Ruß, daß ein homogener Farbeindruck entsteht. Das Material ist naturgemäß nicht transparent.

Aus dem Stand der Technik sind hochtransparente lasermarkierbare und laserschweißbare Kunststoffmaterialien, insbesondere solche, die darüber hinaus auch noch witterungsbeständig sind, nicht bekannt.

Der vorliegenden Erfindung lag daher die Aufgabenstellung zugrunde, hochtransparente lasermarkierbare und laserschweißbare Kunststoffmaterialien bereitzustellen. Insbesondere sollten lasersensitive Zusätze für Kunststoffmaterialien aufgefunden werden, mit denen diese lasermarkierbar und/oder laserschweißbar gemacht werden können, ohne daß die Transparenz des Materials beeinträchtigt wird.

Überraschend wurde gefunden, daß hochtransparente Kunststoffmaterialien durch einen Gehalt an nanoskaligen lasersensitiven Metalloxiden lasermarkierbar und/oder laserschweißbar gemacht werden können, ohne daß die Transparenz beeinträchtigt wird.

Gegenstand der Erfindung ist somit die Verwendung eines hochtransparenten Kunststoffmaterials gemäß Anspruch 1 zum Lasermarkieren und/oder Laserschweißen.

Gegenstand der Erfindung sind weiterhin das Verfahren zur Verschweißung von Kunststoffformkörpern gemäß Anspruch 11, das Verfahren zur Kennzeichnung von Produktionsgütern gemäß Anspruch 12 sowie die lasermarkierten und/oder lasergeschweißten Artikel gemäß Anspruch 13.

Die Erfindung basiert auf der Erkenntnis, daß die aus dem Stand der Technik bekannten Lasermarkierungspigmente bezüglich ihrer Teilchengröße und ihrer Morphologie nicht für hochtransparente Systeme geeignet sind, da sie die kritische Größe von einem Viertel der Wellenlänge des sichtbaren Lichts von ca. 80 nm in aller Regel deutlich überschreiten. Es sind zwar lasersensitive Pigmente mit Primärpartikeln unter 80 nm Teilchengröße bekannt, diese liegen jedoch nicht in Form isolierter Primärpartikel oder kleiner Aggregate vor, sondern sind, wie etwa im Falle von Ruß, nur als hochaggregierte, teilweise agglomerierte Partikel mit deutlich größerem Teilchendurchmesser verfügbar. Die bekannten Lasermarkierungspigmente führen daher zu einer nicht unerheblichen Streuung des Lichts und somit zur Trübung des Kunststoffmaterials.

Unter hochtransparenten Kunststoffmaterialien sind solche zu verstehen, die bei einer Materialstärke von 2 mm eine Transmission größer 85% und insbesondere größer 90% und einen Haze kleiner 3%, vorzugsweise kleiner 2% und insbesondere kleiner 1% aufweisen. Die Bestimmung von Transmission und Haze erfolgen nach ASTM D 1003.

Unter nanoskalig ist zu verstehen, daß die größte Dimension der diskreten Partikel der lasersensitiven Metalloxide kleiner als 1 µm, also im Nanometerbereich ist. Dabei bezieht sich diese Größendefinition auf alle möglichen Partikelmorphologien wie Primärpartikel sowie etwaige Aggregate und Agglomerate.

Die Partikelgröße der lasersensitiven Metalloxide beträgt 1 bis 100 nm und insbesondere 5 bis 100 nm. Bei Wahl der Partikelgröße unter 100 nm sind die Metalloxidpartikel per se nicht mehr sichtbar und beeinträchtigen die Transparenz der Kunststoffmatrix nicht.

In dem Kunststoffmaterial beträgt der Gehalt an lasersensitiven Metalloxiden 0,0001 bis 0,1 Gew.-%, bevorzugt 0,001 bis 0,01 Gew.-%, bezogen auf das Kunststoffmaterial. In diesem Konzentrationsbereich wird in aller Regel und für alle in Frage kommenden Kunststoffmaterialien eine ausreichende Lasermarkierbarkeit bzw. Laserschweißbarkeit der Kunststoffmatrix bewirkt.

Als nanoskalige lasersensitive Metalloxide zur Herstellung von hochtransparenten lasermarkierbaren und/oder laserschweißbaren Kunststoffmaterialien kommen dotiertes Indiumoxid, dotiertes Zinnoxid und dotiertes Antimonoxid in Betracht.

Besonders geeignete Metalloxide sind Indium-Zinnoxid (ITO) oder Antimon-Zinnoxid (ATO) sowie dotierte Indium- bzw. Antimon-Zinnoxide. Besonders bevorzugt ist Indium-Zinnoxid und hiervon wiederum das durch einen partiellen Reduktionsprozess erhältliche "blaue" Indium-Zinnoxid. Das nichtreduzierte "gelbe" Indium-Zinnoxid kann bei höheren Konzentrationen und/oder Partikelgrößen im oberen Bereich einen visuell wahrnehmbaren leicht gelblichen Farbton des Kunststoffmaterials bewirken, während das "blaue" Indium-Zinnoxid zu keiner wahrnehmbaren Farbveränderung führt.

Die erfindungsgemäß einzusetzenden lasersensitiven Metalloxide sind an sich bekannt und auch in nanoskaliger Form, also als diskrete Partikel mit Größen unter 1µm und insbesondere im hier verwendeten Größenbereich kommerziell verfügbar, typischerweise in Form von Dispersionen.

Im Regelfall liegen die lasersensitiven Metalloxide in ihrer Lieferform als agglomerierte Partikel vor, etwa als Agglomerate, deren Teilchengröße zwischen 1 µm bis zu mehreren mm betragen kann. Diese lassen sich mittels des erfindungsgemäßen Verfahrens unter starker Scherung in die Kunststoffmatrix einarbeiten, wodurch die Agglomerate in die nanoskaligen Primärpartikel zerlegt werden.

Die Bestimmung des Agglomerationagrades erfolgt im Sinne der DIN 53206 (von August 1972).

Nanoskalige Metalloxide können beispielsweise durch pyrolytische Verfahren hergestellt werden. Solche Verfahren sind beispielsweise in EP 1 142 830 A, EP 1 270 511 A oder DE 103 11 645 beschrieben. Weiterhin können nanoskalige Metalloxide durch Fällungsverfahren hergestellt werden, wie etwa in DE 100 22 037 beschrieben.

Die nanoskaligen lasersensitiven Metalloxide können in alle transparenten Kunststoffsysteme eingearbeitet werden, um diesen Lasermarkierbarkeit bzw. Laserschweißbarkeit zu verleihen. Der erfindungsgemäße Vorteil der nanoskaligen Metalloxide kommt insbesondere bei hochtransparenten Kunststoffsystemen wie Polycarbonaten, transparenten Polyamiden (beispielsweise Grilamid® TR55, TR90, Trogamid® T5000, CX7323), Polyethylenterephthalat, Polysulfon, Polyethersulfon, Cycloolefincopolymeren (Topas®, Zeonex®), Polymethylmethacrylat und deren Copolymeren zum Tragen, da sie die Transparenz des Materials nicht beeinflussen. Des weiteren sind transparentes Polystyrol und Polypropylen zu nennen, weiterhin alle teilkristallinen Kunststoffe, die durch den Einsatz von Nukleierungsmitteln oder speziellen Verarbeitungsbedingungen zu transparenten Folien oder Formkörpern verarbeitet werden können.

Die erfindungsgemäßen transparenten Polyamide werden allgemein hergestellt aus den Bausteinen: verzweigte und unverzweigte aliphatische (6 C- bis 14 C-Atome), alkylsubstituierte oder unsubstituierten cycloaliphatische (14 C- bis 22 C-Atome), araliphatische Diamine (C14 - C22) und aliphatische und cycloaliphatische Dicarbonsäuren (C6 bis C44); letztere können teilweise durch aromatische Dicarbonsäuren ersetzt werden. Insbesondere können sich die transparenten Polyamide zusätzlich aus Monomerbausteinen mit 6 C-Atomen, 11 C-Atomen beziehungsweise 12 C-Atomen zusammensetzen, die sich von Lactamen oder ω-Aminocarbonsäuren ableiten.

Bevorzugt, aber nicht ausschließlich, werden die erfindungsgemäßen transparenten Polyamide aus den folgenden Bausteinen hergestellt: Laurinlactam oder ω-Aminododekansäure, Azelainsäure, Sebacinsäure, Dodecandisäure, Fettsäuren (C18 - C36; z.B. unter dem Handelsnamen Pripol®), Cyclohexandicarbonsäuren, partieller oder teilweiser Ersatz dieser aliphatischen Säuren durch Isoterephthalsäure, Terephthalsäure, Naphthalindicarbonsäure, Tributylisophthalsäure. Des weiteren finden Verwendung Dekandiamin, Dodecandiamin, Nonandiamin, Hexamethylendiamine verzweigt, unverzweigt oder substituiert, sowie als Vertreter aus der Klasse der alkylsubstituierten/unsubstituierten cycloaliphatischen Diamine Bis-(4-aminocyclohexyl)-methan, Bis-(3-methyl-4-aminocyclohexyl)-methan, Bis-(4-aminocyclohexyl)-propan, Bis-(aminocyclohexan), Bis-(aminomethyl)-cyclohexan, Isophorondiamin oder auch substituierte Pentamethylendiamine.

Beispiele für entsprechende transparente Polyamide sind etwa in EP 0 725 100 und EP 0 725 101 beschrieben.

Besonders bevorzugt sind hochtransparente Kunststoffsysteme auf Basis von Polymethylmethacrylat, Bisphenol-A-Polycarbonat, Polyamid und sogenannter Cycloolefincopolymere aus Norbornen und α-Olefinen die mit Hilfe der erfindungsgemäßen nanoskaligen Metalloxide lasermarkierbar bzw. laserschweißbar gemacht werden können, ohne Beeinträchtigung der Transparenz des Materials.

Die erfindungsgemäßen hochtransparenten lasermarkierbaren Kunststoffmaterialien können als Formkörper, Halbzeuge, Formmassen oder Lacke vorliegen. Die erfindungsgemäßen hochtransparenten laserschweißbaren Kunststoffmaterialien liegen typischerweise als Formkörper oder Halbzeuge vor.

Die Herstellung der erfindungsgemäßen hochtransparenten lasermarkierbaren und/oder laserschweißbaren Kunststoffmaterialien erfolgt in an sich bekannter Weise nach in der Kunststoffherstellung und Verarbeitung gängigen und üblichen Techniken und Verfahren. Dabei ist es möglich, die lasersensitiven Additive vor oder während der Polymerisation oder Polykondensation in einzelne Edukte oder Eduktgemische einzutragen oder auch während der Reaktion zuzusetzen, wobei die dem Fachmann bekannten spezifischen Herstellverfahren für die betreffenden Kunststoffe eingesetzt werden. Im Falle von Polykondensaten wie Polyamiden kann beispielsweise eine Einarbeitung des Additives in eine der Monomerkomponenten erfolgen. Diese Monomerkomponente kann dann mit den übrigen Reaktionspartnern in üblicher Weise einer Polykondensationsreaktion unterworfen werden. Weiter können nach Bildung von Makromolekülen die entstandenen hochmolekularen Zwischen- oder Endprodukte mit den lasersensitiven Additiven versetzt werden, wobei auch in diesem Falle alle dem Fachmann geläufigen Verfahren eingesetzt werden können.

Je nach Rezeptur des Kunststoffmatrixmaterials werden flüssige, halbflüssige und feste Rezepturbestandteile oder Monomere sowie gegebenenfalls erforderliche Additive wie etwa Polymerisationsinitiatoren, Stabilisatoren, (wie UV-Absorber, Wärmestabilisatoren), optische Aufheller, Anstistatika, Weichmacher, Entformungshilfsmittel, Schmiermittel, Dispergierhilfsmittel, Antistatika aber auch Füll- und Verstärkungsstoffe oder Schlagzähmodifikatoren etc. in dafür üblichen Vorrichtungen und Anlagen wie Reaktoren, Rührkesseln, Mischern, Walzenstühlen, Extrudern etc. gemischt und homogenisiert, gegebenenfalls geformt und danach zur Aushärtung gebracht. Die nanoskaligen lasersensitiven Metalloxide werden hierbei zum geeigneten Zeitpunkt in das Material eingebracht und homogen eingearbeitet. Besonders bevorzugt ist die Einarbeitung der nanoskaligen lasersensitiven Metalloxide in Form einer konzentrierten Vormischung (Masterbatch) mit dem gleichen oder einem kompatiblen Kunststoffmaterial.

Es ist vorteilhaft, wenn die Einarbeitung der nanoskaligen lasersensitiven Metalloxide in die Kunststoffmatrix unter hoher Scherung erfolgt. Dies kann durch entsprechende Einstellung der Mischer, Walzenstühle oder Extruder vorgenommen werden. Hierdurch wird eine etwaige Agglomeration oder Aggregation der nanoskaligen Metalloxidpartikel zu größeren Einheiten wirksam verhindert; etwa vorhandene größere Partikel werden zerkleinert. Dem Fachmann sind die entsprechenden Techniken und die jeweils zu wählenden Verfahrensparameter geläufig.

Kunststoffformkörper und Halbzeuge sind durch Spritzgießen oder Extrudieren aus Formmassen oder durch Gussverfahren aus den Monomeren und/oder Präpolymeren erhältlich.

Die Polymerisation erfolgt nach dem Fachmann bekannten Verfahren, beispielsweise durch Zusatz eines oder mehrerer Polymerisationsinitiatoren und Induktion der Polymerisation durch Erwärmen oder Bestrahlen. Zur vollständigen Umsetzung des oder der Monomere kann sich ein Temperschritt an die Polymerisation anschließen.

Lasermarkierbare und laserschweißbare Lackbeschichtungen sind durch Dispergieren von nanoskaligen lasersensitiven Oxiden in üblichen Lackformulierungen, Beschichtung und Trocknung oder Härtung der Lackschicht erhältlich.

Die Gruppe geeigneter Lacke umfasst zum Beispiel Pulverlacke, physikalisch trocknende Lacke, strahlenhärtbare Lacke, ein- oder mehrkomponentige Reaktivlacke wie zum Beispiel Zweikomponenten-Polyurethanlacke.

Nach Herstellung von Kunststoffformteilen oder Lacküberzügen aus den nanoskalige lasersensitive Metalloxide enthaltenden Kunststoffmaterialien lassen sich diese durch Bestrahlen mit Laserlicht markieren oder schweißen.

Die Lasermarkierung kann auf einem handelsüblichen Lasermarkierungsgerät, z.B. einem Laser der Fa. Baasel, Type StarMark SMM65 mit einer durchschnittlichen Laserleistung von 65 Watt und einer Schreibgeschwindigkeit zwischen 1 und 200 mm/s erfolgen. Man legt die zu beschriftenden Formkörper in das Gerät ein und erhält nach Bestrahlung mit fokussiertem Laserstrahl weiße bis dunkelgraue Schriften mit scharfen Konturen und guter Lesbarkeit auf den farblosen transparenten Substraten. In einer besonderen Ausführungsform kann der Laserstrahl vorteilhaft auch oberhalb des Substrats fokussiert werden. Man regt dadurch eine größere Anzahl von Pigmentteilchen an und erhält bereits bei kleinen Pigmentkonzentrationen intensive kontrastreiche Schriftbilder. Die benötigte Energie und die Schreibgeschwindigkeit hängen von Natur und Menge des eingesetzten lasersensitiven Oxids ab. Je höher der Oxidgehalt, desto geringer die benötigte Energie und desto größer die maximale Schreibgeschwindigkeit des Laserstrahls. Die erforderlichen Einstellungen können im Einzelfall ohne weiteres ermittelt werden.

Das Laserschweißen kann auf einem handelsüblichen Lasermarkierungsgerät, z.B. einem Laser der Fa. Baasel, Type StarMark SMM65, mit einer Leistung zwischen 0,1 und 22 Ampere und einer Vorschubgeschwindigkeit zwischen 1 und 100 mm/s erfolgen. Bei der Einstellung von Laserenergie und Vorschubgeschwindigkeit ist darauf zu achten, dass die Leistung nicht zu hoch und die Vorschubgeschwindigkeit nicht zu klein gewählt werden, um unerwünschtes Verkohlen zu vermeiden. Bei zu geringer Leistung und zu hoher Vorschubgeschwindigkeit kann die Verschweißung unzureichend sein. Auch hierzu können die erforderlichen Einstellungen im Einzelfall ohne weiteres ermittelt werden.

Zur Verschweißung von Kunststoffformkörpern oder Kunststoffhalbzeugen ist erforderlich, daß zumindest eines der zu fügenden Teile zumindest im Oberflächenbereich aus erfindungsgemäßem Kunststoffmaterial besteht, wobei man die Fügefläche mit Laserlicht, für das das im Kunststoffmaterial enthaltene Metalloxid sensitiv ist, bestrahlt. Zweckmäßig ist so zu verfahren, daß das dem Laserstrahl zugewandte Fügeteil die Laserenergie nicht absorbiert und das zweite Fügeteil aus erfindungsgemäßem Kunststoffmaterial besteht, wodurch dieses an der Phasengrenze so stark erwärmt wird, dass beide Teile miteinander verschweißen.

Die erfindungsgemäßen hochtransparenten lasersensitiven Kunststoffmaterialien können sehr vorteilhaft zur Herstellung von lasermarkierbaren Produktionsgütern verwendet werden. Die Kennzeichnung von Produktionsgütern, hergestellt aus diesen Kunststoffmaterialien, erfolgt in der Weise, daß man diese mit Laserlicht, für das das im Kunststoffmaterial enthaltene Metalloxid sensitiv ist, bestrahlt.

### Vergleichsbeispiel A:

Als Kunststoffformasse wird Trogamid® CX 7323, ein Handelsprodukt der Degussa AG, Geschäftsbereich High Performance Polymers, Marl, eingesetzt. Als lasersensitives Pigment wird Iriodin® LS800 der Firma Merck KgaA, Darmstadt, in einer Konzentration von 0,2 Gew.-% verwendet.

Die Lichttransmission im sichtbaren Bereich beträgt 80 % und der Haze 5%.

### Vergleichsbeispiel B:

PLEXIGLAS® 7N, ein Handelsprodukt der Degussa AG, Geschäftsbereich Methacrylate, Darmstadt, wird auf einem 35er Extruder, Fa. Storck, mit Entgasungszone bei 240°C compoundiert und granuliert. Als lasersensitives Pigment wird Iriodin® LS800 der Firma Merck KgaA, Darmstadt, in einer Konzentration von 0,2 Gew.-% verwendet.

Die Lichttransmission im sichtbaren Bereich beträgt 85 % und der Haze 4 %.

### Beispiel 1:

### Herstellung eines hochtransparenten lasersensitiven Kunststoffformkörpers

Eine Kunststoffformmasse, enthaltend ein lasersensitives nanoskaliges Pigment, wird in einem Extruder aufgeschmolzen und in einer Spritzgussform zu Kunststoffplättchen gespritzt oder zu Platten, Filmen oder Rohren extrudiert.

Die Einarbeitung des lasersensitiven Pigments erfolgt unter starker Scherung um gegebenenfalls agglomerierte Partikel in nanoskalige Primärteilchen zu zerlegen.

### Ausführungsform A)

Als Kunststoffformasse wird Trogamid® CX 7323, ein Handelsprodukt der Degussa AG, Geschäftsbereich High Performance Polymers, Marl, eingesetzt. Als lasersensitives Pigment wird nanoskaliges Indiumzinnoxid Nano®ITO IT-05 C5000 der Firma Nanogate in einer Konzentration von 0,01 Gew.-% verwendet. Die Lichttransmission im sichtbaren Bereich beträgt 90 % und der Haze 1,5.

### Ausführungsform B)

Als Kunststoffformasse wird PLEXIGLAS® 7N, ein Handelsprodukt der Degussa AG, Geschäftsbereich Methacrylate, Darmstadt, eingesetzt. Als lasersensitives Pigment wird nanoskaliges Indiumzinnoxid Nano®ITO IT-05 C5000 der Firma Nanogate in einer Konzentration von 0,001 Gew.-% verwendet. Im Falle der Extrusion kann vorteilhaft auch eine höhermolekulare Formmasse vom Typ PLEXIGLAS® 7H eingesetzt werden. Die Lichttransmission im sichtbaren Bereich beträgt 92 % und der Haze < 1 %.

### Beispiel 2:

### Herstellung einer hochtransparenten lasersensitiven Kunststoffformmasse

### Ausführungsform A)

Trogamid® CX 7323, ein Handelsprodukt der Degussa AG, Geschäftsbereich High Performance Polymers, Marl, wird mit nanoskaligem Indiumzinnoxid Nano®ITO IT-05 C5000 der Firma Nanogate als lasersensitivem Pigment in einer Konzentration von 0,01 Gew.-% auf einem Extruder Berstorff ZE 2533 D bei 300°C compoundiert und granuliert. Die Lichttransmission im sichtbaren Bereich beträgt 90 % und der Haze 1,5 %.

### Ausführungsform B)

PLEXIGLAS® 7N, ein Handelsprodukt der Degussa AG, Geschäftsbereich Methacrylate, Darmstadt, wird mit nanoskaligem Indiumzinnoxid Nano®ITO IT-05 C5000 der Firma Nanogate als lasersensitivem Pigment in einer Konzentration von 0,001 Gew.-% auf einem 35er Extruder, Fa. Storck mit Entgasungszone bei 240°C compoundiert und granuliert. Die Lichttransmission im sichtbaren Bereich beträgt 92 % und der Haze < 1 %.

### Beispiel 3:

### Herstellung eines hochtransparenten lasersensitiven Lackes und einer Lackbeschichtung

### Ausführungsform A)

Ein strahlenhärtbarer Acrylatlack aus 40 Gewichtsteilen Pentaerythrit-tri-acrylat, 60 Gewichtsteilen Hexandioldiacrylat, 100 Gewichtsteilen nanoskaligem Indiumzinnoxid VP AdNano® ITO R50 der Firma der Degussa und 200 Gewichtsteilen Ethanol wird in einem Glasgefäß 66 h auf der Rollenbank unter Zusatz von Glaskugeln vom Durchmesser 1 mm dispergiert, nach Abtrennung der Mahlkugeln mit 2 Teilen Photoinitiator Irgacure® 184 versetzt und durch Rakeln mit einer Drahtrakel auf Kunststoffplatten aufgetragen. Die Härtung erfolgt nach kurzer Ablüftzeit durch Bestrahlung mit einem handelsüblichen UV-Trockner Fusion F 400 bei einem Vorschub von 1 m/min unter Inertgas. Die Lichttransmission im sichtbaren Bereich beträgt 90 % und der Haze < 2 %.

### Ausführungsform B)

Ein physikalisch trocknender Lack wird durch Dispergieren von 100 Gewichtsteilen nanoskaligem Indiumzinnoxid VP AdNano® ITO R50 der Firma der Degussa, 100 Gewichtsteilen Polymethacrylat (Degalan® 742) und 200 Gewichtsteilen Butylacetat in einem Glasgefäß unter Zusatz von Glaskugeln mit einem Durchmesser von 1 mm über 66 h auf der Rollenbank hergestellt. Das Beschichten erfolgt durch Rakeln mit einer 24 µm Drahtrakel und Trocknen des Lacks bei Raumtemperatur .

Die Lichttransmission im sichtbaren Bereich beträgt 90 % und der Haze < 2 %.

### Beispiel 4:

### Durchführung Lasermarkierung (Guß-PMMA mit 0,01 Gew.-% ITO-Gehalt)

Eine hochtransparente lasersensitive Kunststoffplatte (Abmessung 100mm*60mm*2mm) aus Guß-PMMA mit einem ITO-Gehalt von 0,01 Gew.-% wird in das Werkzeug des Starmark-Lasers SMM65 der Fa. Baasel-Lasertechnik eingelegt. Dabei ist darauf zu achten, daß die Platte mindestens 10mm Abstand zur unteren Auflagefläche des Werkzeugs hat. Der Fokus des Laserstrahls wird auf die Mitte der Plattendicke eingestellt. Am Steuergerät des Lasers werden die Parameter Frequenz (2250 Hz), Lampenstrom (21,0 A) und Schreibgeschwindigkeit (100 mms⁻¹) eingestellt. Nach Eingabe des gewünschten Beschriftungstextes wird der Laser gestartet. Am Ende des Beschriftungsvorganges kann die Kunststoffplatte aus dem Gerät entnommen werden.

Der Kontrast wird mit 4 benotet.

Der Kontrast wurde mit folgendem qualitativen Verfahren bestimmt:
- Kontrastnote 0:: Keine Beschriftung möglich.
- Kontrastnote 1:: Es wird eine Verfärbung der Kunststoffoberfläche beobachtet, ohne das die Schrift lesbar ist.
- Kontrastnote 2:: Die Beschriftung ist gut lesbar.
- Kontrastnote 3:: Die Beschriftung und der Beschriftungstext in Arial Größe 18 fett ist gut lesbar.
- Kontrastnote 4:: Die Beschriftung, der Beschriftungstext in Arial Größe 18 fett und der Beschriftungstext in Arial Größe 12 ist gut lesbar.

### Beispiel 5:

### Durchführung Lasermarkierung (Guß-PMMA mit 0,0001 Gew.-% ITO-Gehalt)

Eine hochtransparente lasersensitive Kunststoffplatte (Abmessung 100mm*60mm*2mm) aus Guß-PMMA mit einem ITO-Gehalt von 0,0001 Gew.-% wird in das Werkzeug des Starmark-Lasers SMM65 der Fa. Baasel-Lasertechnik eingelegt. Dabei ist darauf zu achten, daß die Platte mindestens 10mm Abstand zur unteren Auflagefläche des Werkzeugs hat. Der Fokus des Laserstrahls wird 20mm oberhalb der Mitte der Plattendicke eingestellt. Am Steuergerät des Lasers werden die Parameter Frequenz (2250 Hz), Lampenstrom (22,0 A) und Schreibgeschwindigkeit (10 mms⁻¹) eingestellt. Nach Eingabe des gewünschten Beschriftungstextes wird der Laser gestartet. Am Ende des Beschriftungsvorganges kann die Kunststoffplatte aus dem Gerät entnommen werden.

Der Kontrast wird mit 4 benotet.

### Beispiel 6:

### Durchführung Lasermarkierung (Guß-PMMA beschichtet mit 0,001 Gew.-% ITO-haltigem PMMA-Lack)

Eine hochtransparente lasersensitive Kunststoffplatte (Abmessung 100mm*60mm*2mm) aus Guß-PMMA beidseitig beschichtet mit einem 0,001 Gew.-% ITO-haltigem PMMA-Lack wird in das Werkzeug des Starmark-Lasers SMM65 der Fa. Baasel-Lasertechnik eingelegt. Dabei ist darauf zu achten, daß die Platte mindestens 10mm Abstand zur unteren Auflagefläche des Werkzeugs hat. Der Fokus des Laserstrahls wird 20mm oberhalb der Mitte der Plattendicke eingestellt. Am Steuergerät des Lasers werden die Parameter Frequenz (2250 Hz), Lampenstrom (21,0 A) und Schreibgeschwindigkeit (15 mms⁻¹) eingestellt. Nach Eingabe des gewünschten Beschriftungstextes wird der Laser gestartet. Am Ende des Beschriftungsvorganges kann die Kunststoffplatte aus dem Gerät entnommen werden.

Der Kontrast wird mit 4 benotet.

### Beispiel 7:

### Durchführung Lasermarkierung (PA12 mit 0,1 Gew.-% ITO-Gehalt)

Eine hochtransparente lasersensitive Standard-Spritzguß-Kunststoffplatte (Abmessung 60mm*60mm*2mm) aus PA12 mit einem ITO-Gehalt von 0,1 Gew.-% wird in das Werkzeug des Starmark-Lasers SMM65 der Fa. Baasel-Lasertechnik eingelegt. Dabei ist darauf zu achten , daß die Platte mindestens 10mm Abstand zur unteren Auflagefläche des Werkzeugs hat. Der Fokus des Laserstrahls wird auf die Mitte der Plattendicke eingestellt. Am Steuergerät des Lasers werden die Parameter Frequenz (2250 Hz), Lampenstrom (20,0 A) und Schreibgeschwindigkeit (50 mms⁻¹)eingestellt. Nach Eingabe des gewünschten Beschriftungstextes wird der Laser gestartet. Am Ende des Beschriftungsvorganges kann die Kunststoffplatte aus dem Gerät en tnommen werden.

Der Kontrast wird mit 4 benotet.

### Beispiel 8:

### Durchführung Lasermarkierung (PA12 mit 0,01 Gew.-% ITO-Gehalt)

Eine hochtransparente lasersensitive Standard-Spritzguß-Kunststoffplatte (Abmessung 60mm*60mm*2mm) aus PA12 mit einem ITO-Gehalt von 0,01 Gew.-% wird in das Werkzeug des Starmark-Lasers SMM65 der Fa. Baasel-Lasertechnik eingelegt. Dabei ist darauf zu achten, daß die Platte mindestens 10mm Abstand zur unteren Auflagefläche des Werkzeugs hat. Der Fokus des Laserstrahls wird 20mm oberhalb der Mitte der Plattendicke eingestellt. Am Steuergerät des Lasers werden die Parameter Frequenz (2250 Hz), Lampenstrom (20,0 A) und Schreibgeschwindigkeit (50 mms⁻¹) eingestellt. Nach Eingabe des gewünschten Beschriftungstextes wird der Laser gestartet. Am Ende des Beschriftungsvorganges kann die Kunststoffplatte aus dem Gerät entnommen werden.

Der Kontrast wird mit 4 benotet.

### Beispiel 9:

### Durchführung Laserschweißung (Guß-PMMA mit 0,01 Gew.-% ITO-Gehalt)

Eine hochtransparente lasersensitive Kunststoffplatte (Abmessungen 60mm*60mm*2mm) aus Guß-PMMA mit einem ITO-Gehalt von 0,01 Gew.-% wird mit einer zweiten Kunststoffplatte aus undotiertem Guß-PMMA mit den zu verschweißenden Flächen in Kontakt gebracht. Die Platten werden so in die Schweißhalterung des Starmark-Lasers SMM65 der Fa. Baasel-Lasertechnik eingelegt, daß die undotierte Platte oben liegt, d.h. zuerst vom Laserstrahl durchdrungen wird. Der Fokus des Laserstrahls wird auf die Kontaktfläche der beiden Platten eingestellt. Am Steuergerät des Lasers werden die Parameter Frequenz (2250 Hz), Lampenstrom (22,0 A) und Vorschubgeschwindigkeit (30 mms⁻¹) eingestellt. Nach Eingabe der Größe der zu verschweißenden Fläche (22*4 mm²) wird der Laser gestartet. Am Ende des Schweißvorganges können die verschweißten Kunststoffplatten aus dem Gerät entnommen werden.

Es werden Haftwerte mit der Note 4 im Handtest erreicht.

Die Haftung wird wie folgt bewertet:
- 0: Keine Haftung.
- 1: Geringfügige Haftung.
- 2: Etwas Haftung; mit geringem Aufwand zu trennen.
- 3: Gute Haftung; nur mit großem Aufwand und gegebenenfalls mit Hilfe von Werkzeugen zu trennen
- 4: untrennbare Haftung; Trennung nur durch Kohäsionsbruch

### Beispiel 10:

### Durchführung Laserschweißung (PA12 mit 0,01 Gew.-% ITO-Gehalt)

Eine hochtransparente lasersensitive Standard-Spritzguß-Kunststoffplatte (Abmessungen 60mm*60mm*2mm) aus PA12 mit einem ITO-Gehalt von 0,01 Gew.-% wird mit einer zweiten Standard-Spritzguß-Kunststoffplatte (Abmessungen 60mm*60mm*2mm) aus undotiertem PA12 mit den zu verschweißenden Flächen in Kontakt gebracht. Die Platten werden so in die Schweißhalterung des Starmark-Lasers SMM65 der Fa. Baasel-Lasertechnik eingelegt, daß die undotierte Platte oben liegt, d.h. zuerst vom Laserstrahl durchdrungen wird. Der Fokus des Laserstrahls wird auf die Kontaktfläche der beiden Platten eingestellt. Am Steuergerät des Lasers werden die Parameter Frequenz (2250 Hz), Lampenstrom (22,0 A) und Vorschubgeschwindigkeit (10 mms⁻¹) eingestellt. Nach Eingabe der Größe der zu verschweißenden Fläche (22*4 mm²) wird der Laser gestartet. Am Ende des Schweißvorganges können die verschweißten Kunststoffplatten aus dem Gerät entnommen werden.

Es werden Haftwerte mit der Note 4 im Handtest erreicht.

## Patentansprüche

1. Verwendung eines Kunststoffmaterials zum Lasermarkieren und/oder Laserschweißen, wobei das Kunststoffmaterial nanoskaliges Metalloxid enthält, das ausgewählt ist aus dotiertem Indiumoxid, dotiertem Zinnoxid und dotiertem Antimonoxid,
**dadurch gekennzeichnet, dass** die Partikelgröße des Metalloxids 1 bis 100 nm und der Gehalt an Metalloxid 0,0001 bis 0,1 Gew.-%, bezogen auf das Kunststoffmaterial, beträgt, so dass bei einer Materialstärke des Kunststoffmaterials von 2 mm die Transmission mehr als 85 % und der Haze weniger als 3 % beträgt, beides bestimmt nach ASTM D 1003.

2. Verwendung gemäß Anspruch 1, **dadurch gekennzeichnet, dass** die Partikelgröße des Metalloxids 5 bis 100 nm beträgt.

3. Verwendung gemäß einem der Ansprüche 1 und 2, **dadurch gekennzeichnet, dass** der Gehalt an Metalloxid 0,001 bis 0,01 Gew.-% beträgt.

4. Verwendung gemäß einem der Ansprüche 1 bis 3, **dadurch gekennzeichnet, dass** das nanoskalige Metalloxid Indium-Zinnoxid oder Antimon-Zinnoxid ist.

5. Verwendung gemäß Anspruch 4, **dadurch gekennzeichnet, dass** das nanoskalige Metalloxid blaues Indium-Zinnoxid ist.

6. Verwendung gemäß einem der Ansprüche 1 bis 5, **dadurch gekennzeichnet, dass** die Matrix des Kunststoffmaterials auf Poly(meth)acrylat, Polyamid, Polyurethan, Polyolefinen, Styrolpolymeren und Styrolcopolymeren, Polycarbonat, Silikonen, Polyimiden, Polysulfon, Polyethersulfon, Polyketonen, Polyetherketonen, Polyphenylensulfid, Polyester, Polyethylenoxid, Polyurethan, Polyolefinen oder fluorhaltigen Polymeren basiert.

7. Verwendung gemäß Anspruch 6, **dadurch gekennzeichnet, dass** das Poly(meth)acrylat ein Polymethylmethacrylat ist.

8. Verwendung gemäß Anspruch 6, **dadurch gekennzeichnet, dass** das Polycarbonat ein Bisphenol-A-Polycarbonat ist.

9. Verwendung gemäß einem der Ansprüche 1 bis 8, **dadurch gekennzeichnet, dass** das Kunststoffmaterial als Formkörper, Halbzeug, Formmasse oder Lack vorliegt.

10. Verwendung gemäß einem der Ansprüche 1 bis 9 zur Herstellung von lasermarkierten und/oder laserverschweißten Produktionsgütern.

11. Verfahren zur Verschweißung von Kunststoffformkörpern oder Kunststoffhalbzeugen, wobei zumindest eines der zu fügenden Teile zumindest im Oberflächenbereich aus Kunststoffmaterialien gemäß den Ansprüchen 1 bis 10 besteht, in dem man die Fügefläche mit Laserlicht, für das das im Kunststoffmaterial enthaltene Metalloxid sensitiv ist, bestrahlt.

12. Verfahren zur Kennzeichnung von Produktionsgütern, hergestellt aus Kunststoffmaterialien gemäß den Ansprüchen 1 bis 12, in dem man diese mit Laserlicht, für das das im Kunststoffmaterial enthaltene Metalloxid sensitiv ist, bestrahlt.

13. Lasermarkierter und/oder lasergeschweißter Artikel, hergestellt gemäß einem der Ansprüche 1 bis 12.

## Claims

1. Use of a plastic material for laser marking and/or laser welding, the plastic material containing nanoscale metal oxide selected from doped indium oxide, doped tin oxide and doped antimony oxide,
**characterized in that** the particle size of the metal oxide is 1 to 100 nm and the metal oxide content is 0.0001% to 0.1% by weight, based on the plastic material, so that when the plastic material is 2 mm in thickness the transmission is greater than 85% and the haze is less than 3%, both determined in accordance with ASTM D 1003.

2. Use according to Claim 1, **characterized in that** the particle size of the metal oxide is 5 to 100 nm.

3. Use according to either of Claims 1 and 2, **characterized in that** the metal oxide content is 0.001% to 0.01% by weight.

4. Use according to any one of Claims 1 to 3, **characterized in that** the nanoscale metal oxide is indium-tin oxide or antimony-tin oxide.

5. Use according to Claim 4, **characterized in that** the nanoscale metal oxide is blue indium-tin oxide.

6. Use according to any one of Claims 1 to 5, **characterized in that** the matrix of the plastic material is based on poly(meth)acrylate, polyamide, polyurethane, polyolefins, styrene polymers and styrene copolymers, polycarbonate, silicones, polyimides, polysulphone, polyethersulphone, polyketones, polyetherketones, polyphenylene-sulphide, polyester, polyethyleneoxide, polyurethane, polyolefins or fluorine-containing polymers.

7. Use according to Claim 6, **characterized in that** the poly(meth)acrylate is a polymethyl methacrylate.

8. Use according to Claim 6, **characterized in that** the polycarbonate is a bisphenol A polycarbonate.

9. Use according to any one of Claims 1 to 8, **characterized in that** the plastic material is present in the form of a moulded body, semifinished product, moulding compound or lacquer.

10. Use according to any one of Claims 1 to 9 for producing laser-marked and/or laser-welded articles of manufacture.

11. Method of welding together plastic moulded bodies or plastic semifinished products when at least one of the parts to be joined consists of plastic materials according to Claims 1 to 10 in the surface region at least, said method comprising irradiating the join face with laser light to which the metal oxide contained in the plastic material is sensitive.

12. Method of marking articles of manufacture produced from plastic materials according to Claims 1 to 12, said method comprising irradiating these with laser light to which the metal oxide contained in the plastic material is sensitive.

13. Laser-marked and/or laser-welded article produced according to any one of Claims 1 to 12.

## Revendications

1. Utilisation d'un matériau en matière plastique pour le marquage au laser et/ou la soudure au laser, le matériau en matière plastique contenant de l'oxyde métallique nanoparticulaire qui est choisi parmi l'oxyde d'indium dopé, l'oxyde d'étain dopé et l'oxyde d'antimoine dopé, **caractérisée en ce que** la taille de particule de l'oxyde métallique va de 1 à 100 nm et la teneur en oxyde métallique va de 0,0001 à 0,1 % en poids, par rapport au matériau en matière plastique, de sorte que dans le cas d'une épaisseur du matériau en matière plastique de 2 mm, la transmission est de plus de 85 % et le voile est inférieur à 3 %, l'un et l'autre déterminés selon ASTM D 1003.

2. Utilisation selon la revendication 1, **caractérisée en ce que** la taille de particule de l'oxyde métallique va de 5 à 100 nm.

3. Utilisation selon la revendication 1 ou 2, **caractérisée en ce que** la teneur en oxyde métallique va de 0,001 à 0,01 % en poids.

4. Utilisation selon l'une quelconque des revendications 1 à 3, **caractérisée en ce que** l'oxyde métallique nanoparticulaire est l'oxyde d'indium-étain ou l'oxyde d'antimoine-étain.

5. Utilisation selon la revendication 4, **caractérisée en ce que** l'oxyde métallique nanoparticulaire est l'oxyde d'indium-étain bleu.

6. Utilisation selon l'une quelconque des revendications 1 à 5, **caractérisée en ce que** la matrice du matériau en matière plastique est à base de poly(méth)acrylate, polyamide, polyuréthanne, polyoléfines, polymères de styrène et copolymères de styrène, polycarbonate, silicones, polyimides, polysulfone, polyéthersulfone, polycétones, polyéthercétones, poly(sulfure de phénylène), polyester, polyoxyéthylène, polyuréthanne, polyoléfines ou polymères fluorés.

7. Utilisation selon la revendication 6, **caractérisée en ce que** le poly(méth)acrylate est un poly(méthacrylate de méthyle).

8. Utilisation selon la revendication 6, **caractérisée en ce que** le polycarbonate est un polycarbonate de bisphénol A.

9. Utilisation selon l'une quelconque des revendications 1 à 8, **caractérisée en ce que** le matériau en matière plastique est présent sous forme de corps moulé, de produit semi-fini, de matière à mouler ou de peinture.

10. Utilisation selon l'une quelconque des revendications 1 à 9, pour la fabrication d'articles de production marqués au laser et/ou soudés au laser ;

11. Procédé pour le soudage de corps moulés en matière plastique ou de produits semi-finis en matière plastique, au moins l'une des pièces à assembler consistant au moins dans la zone superficielle en matériaux en matière plastique selon les revendications 1 à 10, dans lequel on irradie la surface d'assemblage avec de la lumière laser à laquelle est sensible l'oxyde métallique contenu dans le matériau en matière plastique.

12. Procédé pour l'identification d'articles de production fabriqués à partir de matériaux en matière plastique selon les revendications 1 à 12, dans lequel on les irradie avec de la lumière laser à laquelle est sensible l'oxyde métallique contenu dans le matériau en matière plastique.

13. Article marqué au laser et/ou soudé au laser, produit selon l'une quelconque des revendications 1 à 12.
